# EUROPEAN PATENT SPECIFICATION

(11) **EP 1 740 053 B1**
(45) Date of publication and mention of the grant of the patent: **01.07.2009**
(21) Application number: 05731854.5
(22) Date of filing: 19.04.2005
(51) Int. Cl.: A22B 7/00, A22B 5/00, B65G 21/14, A22B 5/20

(54) **A PIECE CONVEYOR FOR CONVEYING PARTS OF A CARCASE**
TEILEFÖRDERER ZUM BEFÖRDERN VON TIERKÖRPERTEILEN
TRANSPORTEUR DE MORCEAUX D'UNE CARCASSE

(30) Priority: 19.04.2004 DK 200400608
(43) Date of publication of application: 10.01.2007
(73) Proprietor: KJ Maskinfabriken A/S, 6710 Esbjerg V (DK)
(72) Inventor: BUSCH, Finn, Maag, DK-6710 Esbjerg V (DK)
(74) Representative: Inspicos A/S
(86) International application number: PCT/DK2005/000267
(87) International publication number: WO 2005/099461

(56) References cited:
- EP-A- 0 594 528
- EP-A- 1 321 393
- WO-A-82/03748
- WO-A-03/078282
- DE-A1- 3 027 613
- US-B1- 6 692 345

## Description

### FIELD OF THE INVENTION

The present invention relates to a piece conveyor for separately conveying parts of a carcase. The invention further relates to a method for separately conveying parts of a carcase.

### BACKGROUND OF THE INVENTION

Primary cutting of animal carcases is often performed in a cutting unit comprising a cutting system with two saws, the carcasse thereby being divided into three parts; front end part, middle part and back end part. The two cutting saws are arranged in such a way that they perform parallel incisions in the conveying direction of the carcase. The sizes of the carcases are non-uniform, and in order to obtain an optimal yield from the carcase it is necessary to be able to vary the distances between the two incisions, the incisions thereby being adaptable to the individual carcase. In continuation of the cutting unit a piece conveyor is arranged, the piece conveyor comprising a front end part conveyor, a middle part conveyor and a back end part conveyor for separately conveying the front end part, the middle part and the back end part, respectively.

In the cutting system a known method is to fixate the saw which divides the back end part and the middle part, and to make the saw which divides the front end part and the middle part adjustable in a direction perpendicularly to the direction of the incision. Determination and setting of the incision positions can be performed manually or automatically, e.g. using an image recognition system.

After division in the cutting unit the three parts are positioned closely together, and further automatic conveying from the cutting unit by means of the piece conveyor for separately conveying the front end part, the middle part and the back end part, respectively, has been made difficult, since at least one of the dividing positions on the individual carcase varies in a direction transversally to the conveying direction. This variation may cause variations in size of either the front end part or the middle part, and thereby variations in boundary surface. These variations may cause either the middle part or the front end part to be so large that it extends into the front end part conveyor or the middle part conveyor, respectively. In either case this will result in a very uncertain further conveying in the processing lines,i.a. due to uncertainty in the exact positions of the parts on the subsequent conveyor belts.

At the present time the positioning of the parts on the subsequent piece conveyor is ensured by means of manual surveillance and manual adjustment of the parts on the conveyors of the piece conveyor. This is unhygienic, cumbersome, expensive as well as imprecise.

Because an increasing number of slaughterhouses use automatic processing systems, i.a. for further processing of the parts after the primary cutting, a correct and uniform positioning of the parts on the subsequent conveyor belts is important in order to allow the subsequent processing units to handle the parts In a correct manner.

WO 03/078282 discloses a conveyor for separately conveying objects, comprising several conveyor units arranged parallel to one another in the form of a rail. The conveyor units are adjustable in a crosswise direction.

EP-A-0 594 529 discloses a process and apparatus for treatment of half-carcasses, comprising saws for cutting of the half-carcasses.

### SUMMARY OF THE INVENTION

It is an object of the present invention to provide a conveyor system which fulfils the requirements described above.

This is obtained by a piece conveyor for separately conveying parts of a carcase, wherein the piece conveyor is adapted to be arranged In continuation of a cutting unit, the cutting unit comprising a dividing unit being movable In a direction transverse to the conveying direction for dividing the carcase Into at least a first part and a second part, and wherein the piece conveyor comprises at least two conveyors for separately conveying the first part and the second part, respectively. At least one of the at least two conveyors is movable transversally to the conveying direction, the conveyor thereby being movable accord Ing to the size of the parts. The movable conveyors are provided with a mutual interconnecting mechanism for simultaneous movement of the at least two conveyors transversally to the conveying direction, said mutual interconnecting mechanism being designed in such a way that the distances of movement of the at least two conveyors transversally to the conveying direction may differ. Thereby it is ensured, purely by moving the conveyors, that the parts are supported In the best possible way during further conveying, since the parts may be supported fully or below the middle of the part, the projections from the conveyor thereby being uniform In both sides. Thereby manual adjustment of the parts Is avoided.

The simultaneous movement of the at least two conveyors may be performed by mechanically connecting the first conveyor of the piece conveyor to the movable dividing unit of the dividing system. This is a relatively cost effective and simple way of providing the desired simultaneous movement.

It is sometimes desired that the distances of movement of the at least two conveyors transversally to the conveying direction differ. This may be necessary In order to obtain an optimal end position of the conveyors relatively to the parts, and thereby an optimal position of the parts on the conveyor during further conveying.

In one embodiment the cutting unit may comprise two dividing units for dividing the carcase into three parts, in which case the piece conveyor may comprise three conveyors, at least two of said conveyors being movable transversally to the conveying direction. The piece conveyor is designed In such a way that the two conveyors are closest to each other when a short carcase is divided. In this case the edge of the first conveyor is aligned with the dividing unit of the cutting unit, and the second conveyor is positioned in the middle between the two dividing units of the cutting unit.

When setting the piece conveyor for longer carcases the first conveyor is moved in such a way that its edge is aligned with the newly set dividing unit In the cutting unit, and the second conveyor is moved half that distance, the second conveyor thereby being positioned in the middle between the two dividing units of the cutting unit. Thereby, parts on the first conveyor are conveyed in a fully supported manner, and parts on the second conveyor are conveyed in such a way that they are symmetrically supported under the middle of the part. Thereby a certain conveying of the parts is ensured.

All of the three conveyors may be movable transversally to the conveying direction. Thereby even further flexibility in setting the piece conveyor in accordance with a part of a particular size is obtained.

In one embodiment the interconnecting mechanism may be designed in such a way that the ratio between the distances of movement for the two conveyors is at least substantially constant. This may be a simple and efficient manner of obtaining a correct symmetrical position of the conveyors relatively to the parts.

In one embodiment at least one of the movable conveyors may be curved. This ensures that the parts may be separated for the purpose of the further processing.

In one embodiment the movable curved conveyor(s) may have an at least substantially fixed outlet end and a movable inlet end. This makes it possible to locate the piece conveyor in existing processing conveyors.

The invention further relates to a method for separately conveying parts of a carcase in a conveyor system comprising a cutting unit and a piece conveyor, wherein the piece conveyor is arranged in continuation of the cutting unit, the cutting unit comprising a dividing unit being movable in a direction transverse to the conveying direction for dividing the carcase into at least a first part and a second part, and wherein the piece conveyor comprises at least two conveyors for separately conveying the first part and the second part, respectively. At least one of the at least two conveyors is movable transversally to the conveying direction, and the conveyor is moved according to the size of the parts.

In one embodiment the movable conveyors may be provided with a mutual interconnecting mechanism, and the movable conveyors may be moved simultaneously transversally to the conveying direction in such a way that the distances of movement of the at least two conveyors transversally to the conveying direction may differ. As mentioned above, this may be necessary in order to obtain an optimal end position of the conveyors relatively to the parts, and thereby an optimal position of the parts on the conveyor during further conveying.

In one embodiment movement of the cutting unit transversally to the conveying direction may cause a corresponding movement of at least one of the conveyors transversally to the conveying direction.

In one embodiment the cutting unit may comprise two dividing units for dividing the carcase into three parts, in which case the piece conveyor may comprise three conveyors, at least two of said conveyors being movable transversally to the conveying direction. In this case the method may comprise moving said two conveyors transversally to the conveying direction mutually independently in such a way that the middle conveyor subsequently to the movement is positioned in between the two dividing units.

### BRIEF DESCRIPTION OF THE DRAWINGS

The invention will now be further described with reference to the accompanying drawings, In which
Fig. 1 shows a top view of a piece conveyor according to the invention, the piece conveyor having two movable conveyors and being arranged in continuation of a cutting unit,
Fig. 2 shows a piece conveyor according to the invention conveying parts from a short carcase,
Fig. 3 shows a piece conveyor according to the invention conveying parts from a long carcase,
Fig. 4 shows a method for separately conveying parts from a carcase,
Fig. 5 shows an embodiment of a piece conveyor having two movable conveyors, and seen from the inlet end, and
Figs. 6A and 6B show an embodiment of an interconnecting mechanism between two piece conveyors, and seen from above.

### DESCRIPTION OF PREFERRED EMBODIMENTS

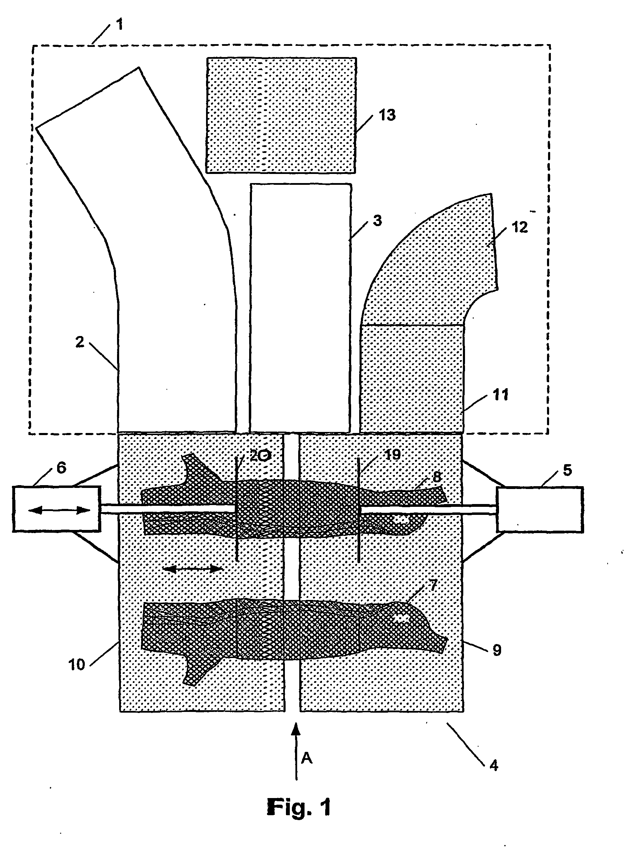

In Fig. 1 is shown a piece conveyor 1 comprising a curved conveyor 2 and a straight conveyor 3, as well as conveyors 11, 12 and 13. The piece conveyor is arranged In continuation of a dividing system 4 having two fixedly mounted cutting units 5, 6, the cutting units comprising a dividing unit 19, 20 in the form of, e.g., a saw, and at least one of the dividing units 19, 20 being movable in a direction being transverse to the conveying direction, shown by arrow A. On the cutting part is shown two carcases 7, 8. The carcases are conveyed past the dividing units 19, 20, whereby the carcases are divided into two parts. The conveyor 10 is movable in a direction perpendicular to the conveying direction, along with the cutting unit 6. The piece conveyor comprising the curved conveyor 2 and the straight conveyor 3, as well as the conveyors 11, 12 and 13 are for the purpose of conveying the parts further on in the processing lines.

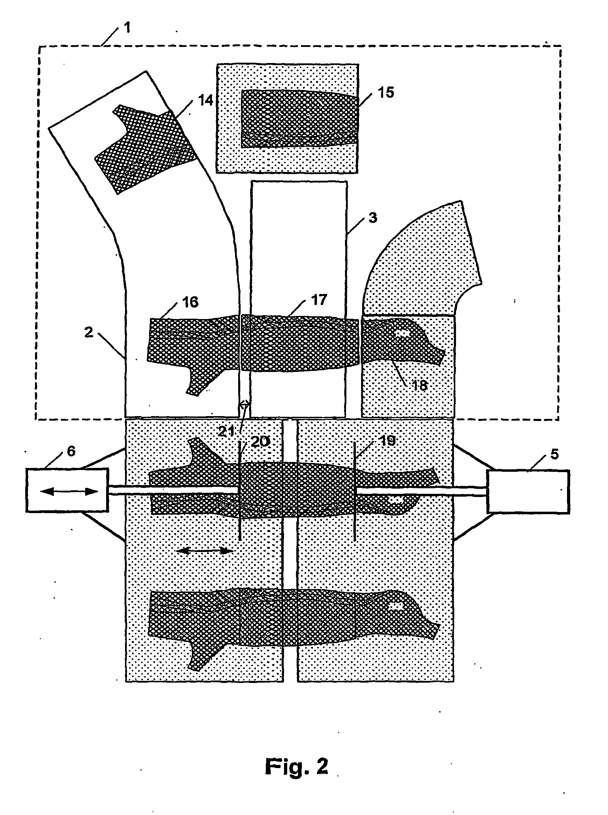

Fig. 2 shows a separation of the parts 14 and 15, which have been separated after cutting, and the parts 16, 17 and 18 which have been cut and are about to be separated. Parts 14 and 16 are positioned with the dividing surface along the edge of conveyor 2, and part 17 is positioned symmetrically supported on conveyor 3. The parts shown in the Figure originate from a short carcase. Therefore conveyors 2 and 3 are positioned closely together with a small distance, and conveyor 3 is positioned in the middle between dividing units 19 and 20 of the cutting units 5 and 6.

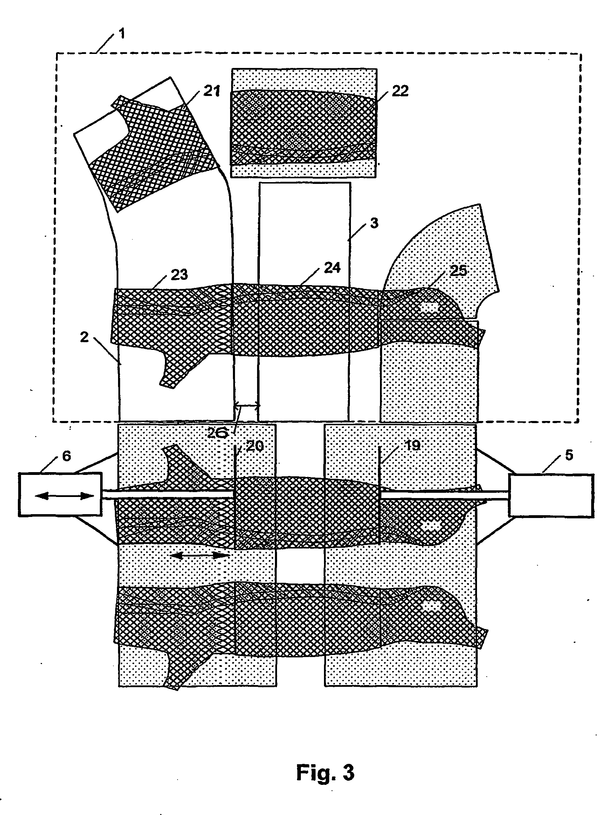

Fig. 3 shows a separation of parts 21 and 22, and parts 23, 24 and 25 about to be separated. Parts 21 and 23 are positioned with the dividing surface along the edge of conveyor 2, and part 24 is positioned symmetrically supported on conveyor 3. The parts shown in the Figure originate from a longer carcase. Therefore conveyors 2 and 3 are positioned further away from each other with a larger distance 26, and conveyor 3 is positioned in the middle between dividing units 19, 20 of the cutting units 5 and 6.

The distance between the dividing units 19 and 20 in Fig. 3 has increased relatively to the distance between the dividing units in Fig. 2, and in the embodiment shown in the Figures, the distance 26 between the conveyors 2 and 3 has increased half the increased distance between the dividing units 19, 20.

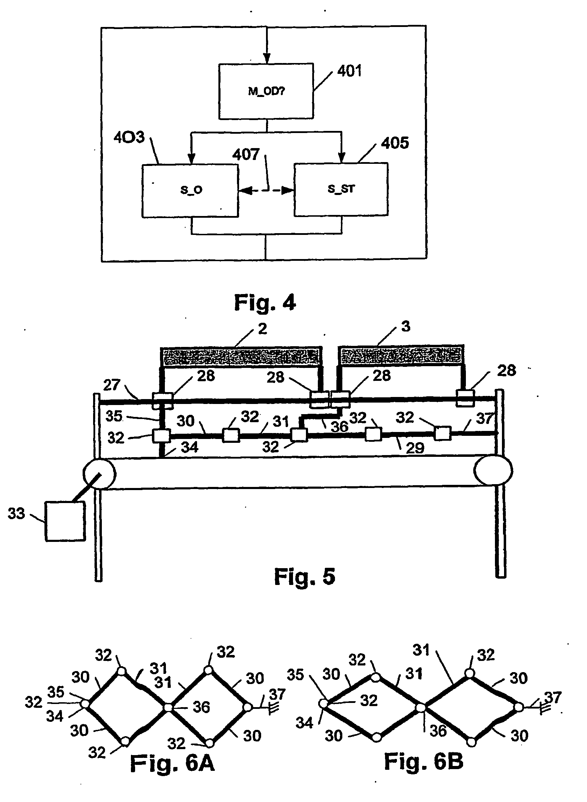

Fig. 4 shows a method for separately conveying parts from a carcase, the conveying being performed using a conveying system comprising a cutting unit and a piece conveyor as described above. At 401 the carcase Is received at the cutting unit for division. Subsequently, depending on how the carcase is to be divided into parts, including depending on the sizes of the parts, cutting unit 403 and conveyors are adjusted in a direction being transverse to the conveying direction 405. This controlling may be made mutually dependent 407 in such a way that a movement of the cutting unit causes a corresponding movement of the conveyors. This mutually dependent movement may, e.g., be performed by means of control signals from a control unit controlling movements of the cutting unit as well as the conveyors. Alternatively, the cutting unit and the conveyors may be mechanically interconnected In such a way that the mutually dependent movement is obtained. In a further design the movement of the conveyors may be controlled by identifying relevant data relating to the parts, e.g. using a vision technology, and subsequently controlling the conveyors in accordance with the identified data.

In one embodiment the piece conveyor may be provided with an independent drive unit for performing the movement of the conveyors transversally to the conveying direction. The drive unit positions the conveyors according to signals from the movable dividing unit of the cutting unit. This is a method which is flexible and provides immediate possibility for connecting the piece conveyor to existing dividing systems. In one embodiment both the conveyors of the conveying system may be provided with independent drive units for positioning the conveyors according to signals from the cutting unit. These signals may be processed in a control unit in such a way that the two conveyors may be positioned independently of each other. This may be applicable for parts having a very non-uniform weight distribution, an unsymmetrical support thereby possibly being more optimal for the further conveying.

Fig. 5 shows an example of a piece conveyor 1 according to the invention, seen from the inlet end, according to an embodiment where the conveyors are mechanically interconnected by means of an interconnecting mechanism for simultaneous movement of the conveyors. The piece conveyor comprises a curved conveyor 2 and a straight conveyor 3 mounted on a horizontal guide 27 and interconnected to this via sliding guides 28, and the two conveyors 2 and 3 are connected to an interconnecting mechanism 29 in the form of a rod mechanism of segment rods which may have varying lengths 30 and 31. The segment rods 30 are straight rods with pivotal joints 32 at each end, and the segment rods 30 are straight rods with pivotal joints 32 at each end and a third joint 36 between these, here shown in the middle between the pivotal joints 32 at the ends. Fig. 5 shows an embodiment of the conveyor system having a separate drive unit 33 capable of moving the conveyors 2 and 3 of the conveyor system via interconnecting mechanism 29 which is fixed to the drive unit system by means of connection 34. Conveyor 2 is connected to interconnecting mechanism 29 by connection 35, and conveyor 3 is connected to the interconnecting mechanism 29 by connection 36, and one end of the interconnecting mechanism 29 is connected to the frame of the conveyor system by connection 37.

Figs. 6A and 6B show the interconnecting mechanism 29 with a constant ratio between the distances of movement of the two conveyors 2 and 3. A distance of movement of conveyor 2 results in half that distance of movement for conveyor 3. The Figure is a top view of the interconnecting mechanism 29 with the segment rods 30 and 31, connection 34 to the drive system 33, connection 35 to conveyor 2 and connection 36 to conveyor 3. Figs. 6A and 6B show the interconnecting mechanism 29 in two positions of the conveyor system 1. The drive system 33 has, from Fig. 6A to Fig. 6B, moved conveyor system 1 via connection 35 in such a way that conveyor 2 has been moved a distance while conveyor 3 has been moved half that distance via connection 36 and interconnecting mechanism 29.

## Claims

1. A piece conveyor (1) for separately conveying parts of a carcase (7; 8) wherein the piece conveyor (1) is arranged in continuation of a cutting unit (5; 6), the cutting unit comprising a dividing unit (19; 20) being movable in a direction transverse to the conveying direction for dividing the carcase (7; 8) into at least a first part and a second part (14; 15; 16; 17; 18; 21; 22; 23; 24; 25), and wherein the piece conveyor (1) comprises at least two conveyors (2; 3; 11; 12; 13) for separately conveying the first part and the second part (14; 15; 16; 17; 18; 21; 22; 23; 24; 25), respectively,
**characterised in that**
at least one of the at least two conveyors (2; 3; 11; 12; 13) is movable transversally to the conveying direction, the conveyor thereby being movable according to the size of the parts (14; 15; 16; 17; 18; 21; 22; 23; 24; 25), and **in that** said movable conveyors (2; 3; 11; 12; 13) are provided with a mutual interconnecting mechanism (29) for simultaneous movement of the at least two conveyors (2; 11; 12; 13) transversally to the conveying direction, said mutual interconnecting mechanism (29) being designed in such a way that the distances of movement of the at least two conveyors (2; 3; 11; 12; 13) transversally to the conveying direction may differ.

2. A piece conveyor according to claim 1 wherein the cutting unit (5; 6) comprises two dividing units (19; 20) for dividing the carcase (7; 8) into three parts (14; 15; 16; 17; 18; 21; 22; 23; 24; 25), and wherein the piece conveyor (1) comprises three conveyors (2; 3; 11; 12; 13); at least two of said conveyors (2; 3; 11; 12; 13) being movable transversally to the conveying direction.

3. A piece conveyor according to claim 2, wherein all of the three conveyors (2; 3; 11; 12; 13) are movable transversally to the conveying direction.

4. A piece conveyor according to any of the preceding claims, **characterised in that** the interconnecting mechanism (29) is designed in such a way that the ratio between the distances of movement for the two conveyors (2; 3; 11; 12; 13) is at least substantially constant.

5. A piece conveyor according to any of the preceding claims, **characterised in that** at least one of the movable conveyors (12) is curved.

6. A piece conveyor according to claim 5, **characterised in that** the movable curved conveyor(s) (12) has/have an at least substantially fixed outlet end and a movable inlet end.

7. A method for separately conveying parts of a carcase (7; 8) in a conveyor system comprising a cutting unit (5; 6) and a piece conveyor (1) wherein the piece conveyor (1) is arranged in continuation of the cutting unit (5; 6), the cutting unit (5; 6) comprising a dividing unit (19; 20) being movable In a direction transverse to the conveying direction for dividing the carcase (7; 8) into at least a first part and a second part (14; 15; 16; 17; 18; 21; 22; 23; 24; 25), and wherein the piece conveyor (1) comprises at least two conveyors (2; 3; 11; 12; 13) for separately conveying the first part and the second part (14; 15; 16; 17; 18; 21; 22; 23; 24; 25), respectively,
**characterised in that**
at least one of the at least two conveyors (2; 3; 11; 12; 13) is movable transversally to the conveying direction, and **in that** the conveyor is moved according to the size of the parts (14; 15; 16; 17; 18; 21; 22; 23; 24; 25).

8. A method according to claim 7, wherein the movable conveyors (2; 3; 11; 12; 13) are provided with a mutual interconnecting mechanism (29), **characterised in that** the movable conveyors are moved simultaneously transversally to the conveying direction in such a way that the distances of movement of the at least two conveyors (2; 3; 11; 12; 13) transversally to the conveying direction may differ.

9. A method according to claim 7 or 8, wherein movement of the cutting unit (5; 6) transversally to the conveying direction causes a corresponding movement of at least one of the conveyors (2; 3; 11; 12; 13) transversally to the conveying direction.

10. A method according to claim 9, wherein the cutting unit (5; 6) comprises two dividing units (19; 20) for dividing the carcase (7; 8) into three parts (14; 15; 16; 17; 18; 21; 22; 23; 24; 25), and wherein piece conveyor (1) comprises three conveyors (2; 3; 11; 12; 13), at least two of said conveyors being movable transversally to the conveying direction, and wherein the method comprises moving said two conveyors (2; 3; 11; 12; 13) transversally to the conveying direction mutually Independently in such a way that the middle conveyor (3) subsequently to the movement is positioned in between the two dividing units (19; 20).

## Patentansprüche

1. Teileförderer (1) zum separaten Befördern von Teilen eines Schlachtkörpers (7; 8), wobei der Teileförderer (1) einer Schneideinheit (5; 6) nachfolgend angeordnet ist, wobei die Schneideinheit über eine Zerteileinheit (19; 20) verfügt, die in einer Richtung quer zu der Förderrichtung zum Zerteilen des Schlachtkörpers (7; 8) in wenigstens einen ersten Teil und einen zweiten Teil (14; 15; 16; 17; 18; 21; 22; 23; 24; 25) bewegbar ist und wobei der Teileförderer (1) wenigstens zwei Förderer (2; 3; 11; 12; 13) zum separaten Befördern jeweils des ersten Teils und des zweiten Teils (14; 15; 16; 17; 18; 21; 22; 23; 24; 25) aufweist,
**dadurch gekennzeichnet, dass**
wenigstens einer der beiden Förderer (2; 3; 11; 12; 13) quer zu der Förderrichtung bewegbar ist, wobei der Förderer dabei entsprechend der Größe der Teile (14; 15; 16; 17; 18; 21; 22; 23; 24; 25) bewegbar ist, und dass die bewegbaren Förderer (2; 3; 11; 12; 13) mit einem gegenseitig wirkenden Verbindungsmechanismus (29) zum gleichzeitigen Bewegen der wenigstens zwei Förderer (2; 3; 11; 12; 13) quer zu der Förderrichtung ausgestattet sind, wobei der gegenseitige Verbindungsmechanismus (29) so eingerichtet ist, dass die Bewegungsabstände der wenigstens zwei Förderer (2; 3; 11; 12; 13) quer zu der Förderrichtung unterschiedlich sein können.

2. Teileförderer nach Anspruch 1, wobei die Schneideinheit (5; 6) wenigstens zwei Zerteileinheiten (19; 20) zum Zerteilen des Schlachtkörpers (7; 8) in drei Teile (14; 15; 16; 17; 18; 21; 22; 23; 24; 25) aufweist und wobei der Teileförderer (1) über wenigstens drei Förderer (2; 3; 11; 12; 13) verfügt, wobei wenigstens zwei dieser Förderer (2; 3; 11; 12; 13) quer zu der Förderrichtung bewegbar sind.

3. Teileförderer nach Anspruch 2, bei dem alle drei Förderer (2; 3; 11; 12; 13) quer zu der Förderrichtung bewegbar sind.

4. Teileförderer nach einem der vorangehenden Ansprüche, **dadurch gekennzeichnet, dass** der Verbindungsmechanismus (29) so eingerichtet ist, dass das Verhältnis zwischen den Bewegungsabständen der beiden Förderer (2; 3; 11; 12; 13) wenigstens im Wesentlichen konstant ist.

5. Teileförderer nach einem der vorangehenden Ansprüche, **dadurch gekennzeichnet, dass** wenigstens einer der bewegbaren Förderer (12) gekrümmt ist.

6. Teileförderer nach Anspruch 5, **dadurch gekennzeichnet, dass** der (die) bewegbare(n) gekrümmte(n) Förderer (12) ein wenigstens im Wesentlichen fixiertes Auslassende und ein bewegbares Einlassende aufweist/aufweisen.

7. Verfahren zum separaten Befördern von Teilen eines Schlachtkörpers (7; 8) in einem Fördersystem mit einer Schneideinheit (5; 6) und mit einem Teileförderer (1), wobei der Teileförderer (1) einer Schneideinheit (5; 6) nachfolgend angeordnet ist, wobei die Schneideinheit (5; 6) über eine Zerteileinheit (19; 20) verfügt, die in einer Richtung quer zu der Förderrichtung zum Zerteilen des Schlachtkörpers (7; 8) in wenigstens ein erstes Teil und in ein zweites Teil (14; 15; 16; 17; 18; 21; 22; 23; 24; 25) bewegbar ist, und wobei der Teileförderer (1) über wenigstens zwei Förderer (2; 3; 11; 12; 13) zum separaten Befördern jeweils des ersten Teils und des zweiten Teils (14; 15; 16; 17; 18; 21; 22; 23; 24; 25) verfügt,
**dadurch gekennzeichnet, dass**
wenigstens einer der wenigstens zwei Förderer (2; 3; 11; 12; 13) quer zu der Förderrichtung bewegbar ist und dass der Förderer entsprechend der Größe der Teile (14; 15; 16; 17; 18; 21; 22; 23; 24; 25) bewegt wird.

8. Verfahren nach Anspruch 7, wobei die bewegbaren Förderer (2; 3; 11; 12; 13) mit einem gegenseitigen Verbindungsmechanismus (29) ausgestattet sind, **dadurch gekennzeichnet, dass** die bewegbaren Förderer gleichzeitig quer zu der Förderrichtung derart bewegt werden, dass die Bewegungsabstände der wenigstens zwei Förderer (2; 3; 11; 12; 13) quer zu der Förderrichtung unterschiedlich sein können.

9. Verfahren nach Anspruch 7 oder 8, wobei die Bewegung der Schneideinheit (5; 6) quer zu der Förderrichtung eine entsprechende Bewegung wenigstens eines der Förderer (2; 3; 11; 12; 13) quer zu der Förderrichtung verursacht.

10. Verfahren nach Anspruch 9, wobei die Schneideinheit (5; 6) über wenigstens zwei Zerteileinheiten (19; 20) zum Zerteilen des Schlachtkörpers (7; 8) in drei Teile (14; 15; 16; 17; 18; 21; 22; 23; 24; 25) verfügt und wobei der Teileförderer (1) wenigstens drei Förderer (2; 3; 11; 12; 13) aufweist, wobei wenigstens zwei der Förderer quer zu der Förderrichtung bewegbar sind, wobei das Verfahren das Bewegen der beiden Förderer (2; 3; 11; 12; 13) quer zu der Förderrichtung dergestalt wechselweise unabhängig umfasst, dass der mittlere Förderer (3) nach der Bewegung zwischen den beiden Zerteileinheiten (19; 20) angeordnet ist.

## Revendications

1. Transporteur de morceaux (1) destiné à transporter séparément des parties de carcasse (7, 8) et installé dans le prolongement d'une unité de découpe (5, 6), l'unité de découpe comprenant une unité diviseuse (19, 20) mobile dans une direction transversale à la direction de transport, afin de diviser la carcasse (7, 8) en au moins une première partie et une seconde partie (14,15, 16,17,18, 21, 22, 23, 24, 25) ; et dans lequel le transporteur de morceaux (1) comprend au moins deux transporteurs (2, 3, 11, 12, 13) destinés à transporter séparément la première et la seconde partie (14, 15, 16, 17, 18, 21, 22, 23, 24, 25), respectivement,
**caractérisé en ce que**
l'un au moins des au moins deux transporteurs (2, 3, 11, 12, 13) est mobile transversalement à la direction de transport, le transporteur pouvant par conséquent se déplacer en fonction de la taille des parties (14, 15, 16, 17, 18, 21, 22, 23, 24, 25), et **en ce que** lesdits transporteurs mobiles (2, 3, 11, 12, 13) sont munis d'un mécanisme (29) d'interconnexion réciproque destiné à déplacer simultanément les au moins deux transporteurs (2, 3, 11, 12, 13) transversalement à la direction de transport, ledit mécanisme (29) d'interconnexion réciproque étant conçu de telle sorte que les distances de déplacement des au moins deux transporteurs (2, 3, 11, 12, 13) transversalement à la direction de transport puissent différer l'une de l'autre.

2. Transporteur de morceaux selon la revendication 1, dans lequel l'unité de découpe (5, 6) comprend deux unités diviseuses (19, 20) destinées à diviser la carcasse (7, 8) en trois parties (14, 15, 16, 17, 18, 21, 22, 23, 24, 25), et dans lequel le transporteur de morceaux (1) comprend trois transporteurs (2, 3, 11, 12, 13), deux au moins desdits transporteurs (2, 3, 11, 12, 13) étant mobiles transversalement à la direction de transport.

3. Transporteur de morceaux selon la revendication 2, dans lequel les transporteurs (2, 3, 11, 12, 13) sont tous trois mobiles transversalement à la direction de transport.

4. Transporteur de morceaux selon l'une quelconque des revendications précédentes, **caractérisé en ce que** le mécanisme (29) d'interconnexion est conçu de sorte que le rapport entre les distances de déplacement des deux transporteurs (2, 3, 11, 12, 13) soit au moins sensiblement constant.

5. Transporteur de morceaux selon l'une quelconque des revendications précédentes, **caractérisé en ce que** l'un au moins des transporteurs mobiles (12) est courbe.

6. Transporteur de morceaux selon la revendication 5, **caractérisé en ce que** le(s) transporteur(s) courbe(s) mobile(s) (12) a/ont une extrémité de sortie au moins sensiblement fixe et une extrémité d'entrée mobile.

7. Procédé destiné à transporter séparément des parties de carcasse (7, 8) dans un système transporteur comportant une unité de découpe (5, 6) et un transporteur de morceaux (1), dans lequel le transporteur de morceaux (1) est installé dans le prolongement de l'unité de découpe (5, 6), l'unité de découpe (5, 6) comportant une unité diviseuse (19, 20) mobile dans une direction transversale à la direction de transport et destinée à diviser la carcasse (7, 8) en au moins une première partie et une seconde partie (14, 15, 16, 17, 18, 21, 22, 23, 24, 25), et dans lequel le transporteur de morceaux (1) comprend au moins deux transporteurs (2, 3, 11, 12, 13) destinés à transporter séparément la première et la seconde partie (14, 15, 16, 17, 18, 21, 22, 23, 24, 25), respectivement,
**caractérisé en ce que**
l'un au moins des au moins deux transporteurs (2, 3, 11, 12, 13) est mobile transversalement à la direction de transport, et **en ce que** le transporteur se déplace en fonction de la dimension des parties (14, 15, 16, 17, 18, 21, 22, 23, 24, 25).

8. Procédé selon la revendication 7, dans lequel les transporteurs mobiles (2, 3, 11, 12, 13) sont munis d'un mécanisme (29) d'interconnexion réciproque, **caractérisé en ce que** les transporteurs mobiles se déplacent simultanément transversalement à la direction de transport, de telle sorte que les distances de déplacement des au moins deux transporteurs (2, 3, 11, 12, 13) transversalement à la direction de transport puissent différer l'une de l'autre.

9. Procédé selon la revendication 7 ou 8, dans lequel le déplacement de l'unité de découpe (5, 6) transversalement à la direction de transport entraîne le déplacement correspondant de l'un au moins des transporteurs (2, 3, 11, 12, 13) transversalement à la direction de transport.

10. Procédé selon la revendication 9, dans lequel l'unité de découpe (5, 6) comprend deux unités diviseuses (19, 20) destinées à diviser la carcasse (7, 8) en trois parties (14, 15, 16, 17, 18, 21, 22, 23, 24, 25), et dans lequel le transporteur de morceaux (1) comprend trois transporteurs (2, 3, 11, 12, 13) ; deux au moins desdits transporteurs étant mobiles transversalement à la direction de transport, et dans lequel le procédé comprend le déplacement desdits deux transporteurs (2, 3, 11, 12, 13) transversalement à la direction de transport et indépendamment l'un de l'autre, de sorte que le transporteur du milieu (3), du fait du déplacement, se trouve placé entre les deux unités diviseuses (19, 20).
